# EUROPEAN PATENT APPLICATION

(11) **EP 2 521 311 A1**
(43) Date of publication of application: **07.11.2012**
(21) Application number: 11750153.6
(22) Date of filing: 11.01.2011
(51) Int. Cl.: H04L 12/24

(54) **RESOURCE CONTROL METHOD, APPARATUS AND SYSTEM IN PEER-TO-PEER NETWORK**

(30) Priority: 05.03.2010 CN 201010120258
(71) Applicant: Huawei Technologies Co., Ltd., Shenzhen, Guangdong 518129 (CN)
(72) Inventor: GU, Yingjie, Shenzhen, Guangdong 518129 (CN); SONG, Haibin, Shenzhen, Guangdong 518129 (CN); ZONG, Ning, Shenzhen, Guangdong 518129 (CN)
(74) Representative: Pfenning, Meinig & Partner GbR
(86) International application number: PCT/CN2011/070160
(87) International publication number: WO 2011/107000

(57) **Abstract**

A resource control method, apparatus, and system in a peer-to-peer network are disclosed. The resource control method includes: obtaining, by a content request node, resource control information set by a source node of a content, where the content is stored in a storage which provides the content, and the storage is a network node which provides content storage services for the source node of the content; and sending, by the content request node, the resource control information to the storage, where the resource control information is used to control resources used for performing content operations between the storage and the content request node. Through the above technical solutions, the number of terminal nodes interacting with the storage can be lowered, so as to reduce performance requirements on the storage.

## Description

This application claims priority to Chinese Patent Application No. 201010120258.7, filed with the Chinese Patent Office on March 5, 2010 and entitled "RESOURCE CONTROL METHOD, APPARATUS, AND SYSTEM IN PEER-TO-PEER NETWORK," which is incorporated herein by reference in its entirety.

### FIELD OF THE INVENTION

The present invention relates to the field of network communications technologies, and in particular, to a resource control technology in a peer-to-peer network.

### BACKGROUND OF THE INVENTION

In a Peer-to-peer (peer-to-peer, P2P) network, a terminal node may obtain shared contents of multiple types such as video data and audio data from other terminal node. However, because the upload bandwidth is generally lower than the download bandwidth, the speed for obtaining contents from other terminal node by the terminal node is affected, and thus rapid content distribution in the P2P network is affected.

Currently, a storage (Locker) is configured in the P2P network to implement rapid content distribution. The storage is a network node which provides content storage services for the terminal nodes. A terminal node uploads shared contents to the Locker, and other terminal nodes download the shared contents from the Locker. In a specific example, a terminal node A uploads a shared content 1 to a Locker, and when a terminal node B requests the content 1 from the terminal node A, the terminal node A instructs the terminal node B to obtain the content 1 from the Locker.

In the process of implementing the present invention, the inventors find that the resource control for the storage, such as control of the number of connections of the storage open for other terminal nodes, storage spaces provided for the uploaded shared contents, and bandwidths provided for the download connections, requires the storage to exchange information with shared content providers and shared content requesters respectively, resulting in problems such as too many terminal nodes interacting with the storage and high performance requirements on the storage.

### SUMMARY OF THE INVENTION

Embodiments of the present invention provide a resource control method, apparatus, and system in a peer-to-peer network, which lowers the number of terminal nodes interacting with a storage and reduce performance requirements on the storage.

An embodiment of the present invention provides a resource control method in a peer-to-peer network, which includes:
obtaining, by a content request node, resource control information set by a source node of a content, where the content is stored in a storage which provides the content, and the storage is a network node which provides content storage services for the source node of the content; and
sending, by the content request node, the resource control information to the storage, where the resource control information is used to control resources used for performing content operations between the storage and the content request node.

An embodiment of the present invention provides a terminal device, which is a peer node in a peer-to-peer network and includes:
an obtaining module, configured to obtain resource control information set by a source node of a content, where the content is stored in a storage which provides the content, and the storage is a network node which provides content storage services for the source node of the content; and
a sending module, configured to send the resource control information to the storage, where the resource control information is used to control resources used for performing content operations between the storage and the content request node.

An embodiment of the present invention provides a resource control system in a peer-to-peer network, which includes:
a content request node configured to obtain resource control information set by a source node of a content, where the content is stored in a storage which provides the content, and send the resource control information to the storage; and
the storage, which is a network node that provides content storage services for the source node of the content, and configured to receive the resource control information, and perform content operations with the content request node according to resources corresponding to the resource control information.

It can be known based on the technical solutions described above that, the content request node obtains the resource control information, set by the source node of the content, for accessing the content, and sends the resource control information to the storage, so as to avoid the information interaction process between the storage and the source node of the content, thereby lowering the number of the terminal nodes interacting with the storage and reducing the performance requirements on the storage.

### BRIEF DESCRIPTION OF THE DRAWINGS

In order to illustrate the technical solutions in embodiments of the present invention or in the prior art more clearly, accompanying drawings needed in the description of the embodiments or the prior art are briefly described hereunder. Evidently, the accompanying drawings illustrate only some embodiments of the present invention, and a person having ordinary skill in the art may obtain other drawings according to the accompanying drawings without creative efforts.
FIG. 1 is a flowchart of a resource control method in a peer-to-peer network according to a first embodiment of the present invention;
FIG. 2 is a flowchart of a resource control method in a peer-to-peer network according to a second embodiment of the present invention;
FIG. 3 is a schematic diagram of a terminal device according to a third embodiment of the present invention; and
FIG. 4 is a schematic diagram of a resource control system in a peer-to-peer network according to a fourth embodiment of the present invention.

### DETAILED DESCRIPTION OF THE EMBODIMENTS

The specific implementation process of the present invention is hereinafter illustrated with reference to exemplary embodiments. Obviously, the embodiments illustrated are only a part rather than all of the embodiments of the present invention. Based on the embodiments of the present invention, all other embodiments obtained by a person having ordinary skill in the art without creative efforts shall fall within the protection scope of the present invention.

### Embodiment 1

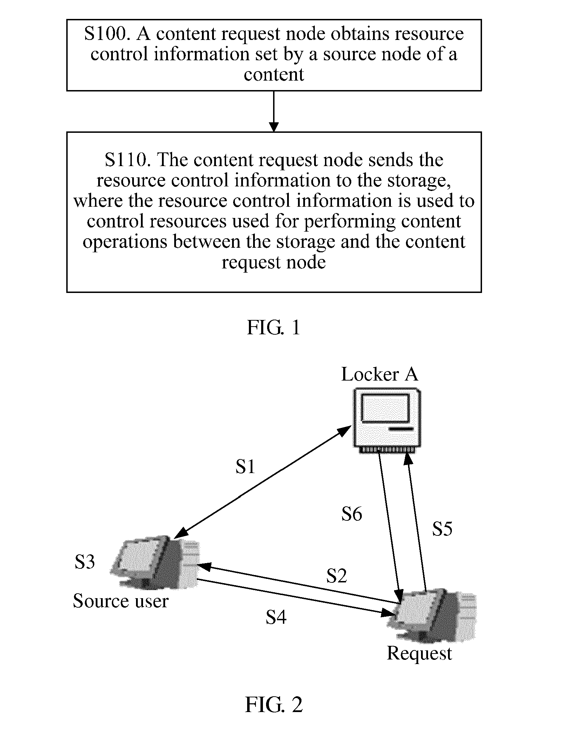

A resource control method in a peer-to-peer network. A flow of the method is as shown in FIG. 1. In FIG. 1, S 100: A content request node obtains resource control information set by a source node of a content. The content request node may also obtain information about a storage which provides the content.

The content request node may be a terminal node in the network. The source node is a terminal node which provides the content to the corresponding storage. The content request node may determine the storage which provides the content and obtain the resource control information in multiple modes. For example, the content request node obtains the information about the storage which provides the content and the resource control information from the source node of the content. For another example, the content request node obtains the information about the storage which provides the content and the resource control information from a directory server in the peer-to-peer network. For another example, the content request node obtains one of the information about the storage and the resource control information from the source node of the content and obtains the other one of the information about the storage and the resource control information from the directory server. In this embodiment, a specific implementation process in which the content request node obtains the information about the storage and the resource control information is not limited. The resource control information in S 100 may be resource control information set by the source node for the content, or may be resource control information set by the source node for the content request node. In this embodiment, a specific expression form of the resource control information is not limited.

In a specific example, the obtaining, by the content request node, the information about the storage which provides the content and the resource control information from the source node of the content includes: when the content request node needs to obtain a content (for example, a video or an audio), obtaining, by the content request node, a list of peer nodes which can provide the content from the directory server, where the list of peer nodes contains information about peer nodes which can provide the content. The content request node may obtain the list of peer nodes from the directory server in a conventional manner. In this embodiment, a specific implementation manner through which the content request node obtains the list of peer nodes from the directory server and a specific expression form of the content are not limited. After obtaining the list of peer nodes, the content request node determines the source node of the content according to the list of peer nodes, that is, selects a peer node from the list of peer nodes, where the information about the selected peer node is the information about the source node. The content request node may obtain the information about the storage and the resource control information from the source node according to the information about the source node. Optionally, the content request node may also obtain the access right control information from the source node, and the content request node may obtain the information about the storage, the resource control information, and the access right control information at the same time from one message sent by the source node. Alternatively, the content request node may also obtain the information about the storage, the resource control information, and the access right control information respectively from multiple messages sent by the source node. In a specific example, the content request node obtains the information about the storage and the resource control information from one message sent by the source node, and obtains the access right control information from another message sent by the source node. The access right control information may be used to check whether the content request node has rights to access a content which is stored in the storage.

In another specific example, the obtaining, by the content request node, the information about the storage which provides the content and the resource control information from the source node of the content includes: when the content request node needs to obtain a content, performing, by the content request node, routing computation and obtaining information about the source node of the content according to a result of the routing computation. The content request node may perform the routing computation in a conventional routing computation manner. In this embodiment, a specific implementation manner in which the content request node performs the routing computation is not limited. After routing computation, the content request node may obtain the information about the storage and the resource control information from the source node according to the information about the source node. The content request node may also obtain access right control information from the source node. A specific example is as described above and will not be repeatedly described herein.

In S 100, the resource control information obtained by the content request node may be resource control information which is not signed digitally and is not encrypted, or resource control information which is signed digitally or encrypted. In addition, the access right control information obtained by the content request node may be access right control information which is not signed digitally and encrypted, or resource control information which is signed digitally or encrypted.

If the obtained resource control information or access right control information is signed digitally or encrypted, a key (for example, a public key or a private key) involved in the digital signature or encryption may be determined in advance through negotiation by the source node and the storage, or be a key derived based on a key which is determined in advance through negotiation (for example, a key which is periodically derived according to the key determined in advance through negotiation). The negotiation in advance is, for example, negotiating a key with the storage by the source node upon successful registration, or for another example, negotiating a key with the storage in a specific application after the source node is successfully registered. In this embodiment, specific implementation manners in which the source node obtains the key and in which the resource control information and/or the access right control information is signed digitally or encrypted are not limited. By signing digitally or encrypting the resource control information or the access right control information with a key, the security of the resource control information or the access right control information is enhanced, which may protect the resource control information or the access right control information from being tampered.

S110: The content request node sends the obtained resource control information to the storage, where the resource control information is used to control resources used for performing content operations between the storage and the content request node. The content operations including, for example, uploading, by the content request node, a content to the storage, or downloading, by the content request node, a content from the storage. In this embodiment, specific operations included in the content operations are not limited.

The content request node may send the obtained resource control information to the storage in multiple manners. For example, the content request node encapsulates the obtained resource control information into a message (the message does not carry the access right control information), and sends the message to the storage. For another example, the content request node encapsulates the obtained resource control information and the obtained access right control information together into a message, and sends the message to the storage. In this embodiment, a specific name of the message, a specific protocol used by the messages, and a specific implementation manner in which the content request node sends the resource control information to the storage are not limited.

In the prior art, the source node sends the resource control information to the storage. However, if there are many content request nodes which request downloading of the content, or the content has many fragments, the content request node has to request the fragments multiple times and the information interaction between the source node and the storage is very frequent, which raises very high requirements on the processing capability of the storage. In addition, when the resource control information is received, the storage needs to create a table for the resource control information, which occupies the space of the storage. Sometimes, for example, in case of attacks, the content request node may obtain the resource control information, but not download the content, and at this time resources are wasted for the interaction between the source node and the storage and the maintenance of the space and table on the storage. In the first embodiment, the content request node obtains the resource control information set, by the source node of the content, for accessing the content, and the content request node sends the resource control information to the storage, so as to avoid the information interaction process between the storage and the source node of the content, thereby lowering the number of the terminal nodes interacting with the storage and reducing the performance requirements on the storage.

### Embodiment 2

A resource control method in a peer-to-peer network. A flow of the method is as shown in FIG. 2. In FIG. 2, S1: A source user (that is, a source node) negotiates a pair of keys with a storage Locker A. The negotiation process may take place when the source user is successfully registered, for example, when the source user is successfully registered to a DECoupled Application Data Enroute (Decoupled Application Data Enroute, DECADE) system, or take place in an application after the source user is successfully registered. If the negotiation process takes place when the source user is successfully registered, the keys obtained through negotiation may be applied in multiple application scenarios. If the negotiation process takes place in a specific application, the keys obtained through negotiation may be specific to an application scenario (for example, an application scenario in this embodiment).

S2: The source user receives a content request message sent by a requester (that is, a content request node), for example, a message requesting uploading of a content or a message requesting downloading of a content. The requester may get information about the source user from a list of peer nodes obtained from a directory server, or the requester may get the information about the source user according to a result of routing computation, so that the requester can send the content request message to the source user according to the information about the source user.

S3: After the source user receives the content request message, the source user encapsulates resource control information to be allocated to the requester and a Token (that is, access right control information set by the source user for the content or for the requester) into a message. It should be noted that the message may include the resource control information but not the access right control information. The source user may use a key obtained through negotiation to sign digitally or encrypt only the resource control information in the message, or the source user may use the key obtained through negotiation to sign digitally or encrypt only the Token in the message, or the source user may use the keyobtained through negotiation to sign digitally or encrypt the resource control information and the access right control information in the message.

S4: The source user sends the message to the requester and instructs the requester to upload the content to or download the content from a Locker A specified by the source user.

S5: The requester sends a content operation request to the Locker. The content operation request carries the Token and the resource control information and is, for example, an operation request for uploading the content or an operation request for downloading the content.

S6: The Locker A verifies the Token in the operation request by using a negotiated key to determine whether the Token is tampered. If the verification is passed (that is, the Token is not tampered), the Locker A decrypts the resource control information which is signed digitally or encrypted in the operation request and obtains a decrypted resource control information, and the Locker A allocates resources to the requester according to the resource control information, for uploading or downloading the content by the requester.

### Embodiment 3

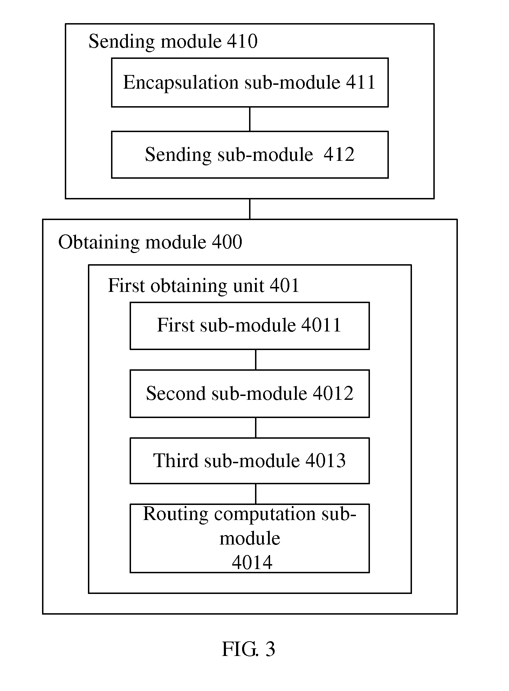

A terminal device. The terminal device is a peer node in a peer-to-peer network. The terminal device is as shown in FIG. 3.

The terminal device in FIG. 3 includes an obtaining module 400 and a sending module 410.

The obtaining module 400 is configured to obtain resource control information set by a source node of a content. The obtaining module 400 may also obtain information about a storage which provides the content. The resource control information obtained by the obtaining module 400 may be resource control information set by the source node for the content, or may be resource control information set by the source node for the content request node. In this embodiment, a specific expression form of the resource control information is not limited. Optionally, the obtaining module 400 may also obtain access right control information set by the source node for the content request node.

The resource control information obtained by the obtaining module 400 may be resource control information which is not signed digitally and encrypted, or resource control information which is signed digitally or encrypted. In addition, the access right control information obtained by the obtaining module 400 may be access right control information which is not signed digitally and encrypted, or the resource control information which is signed digitally or encrypted.

If the resource control information or the access right control information obtained by the obtaining module 400 is signed digitally or encrypted, a key (for example, a public key or a private key) involved in the digital signature or encryption may be determined in advance through negotiation by the source node and the storage. A specific negotiation process is as described in the first embodiment and will not be repeatedly described herein.

The obtaining module 400 may determine the storage which provides the content and obtain the resource control information in multiple modes. For example, a first obtaining unit 401 of the obtaining module 400 obtains the information about the storage which provides the content and the resource control information from the source node of the content. For another example, the obtaining module 400 may obtain the information about the storage which provides the content and the resource control information from a directory server in the peer-to-peer network. In addition, the obtaining module 400 may obtain one of the information about the storage and the resource control information from the source node of the content and obtain the other one of the information about the storage and the resource control information from the directory server. In this embodiment, a specific implementation process in which the obtaining module 400 obtains the information about the storage and the resource control information is not limited.

The first obtaining unit 401 of the obtaining module 400 may include a first sub-module 4011, a second sub-module 4012, and a third sub-module 4013. In addition, the first obtaining unit 401 may also include a routing computation sub-module 4014 and the third sub-module 4013.

The first sub-module 4011 is configured to obtain a list of peer nodes which provide a content from the directory server. That is, when a peer node needs to obtain a content (for example, a video or an audio), the first sub-module 4011 obtains a list of peer nodes which can provide the content from the directory server. The list of peer nodes obtained by the first sub-module 4011 contains information about the peer nodes which can provide the content. The first sub-module 4011 may obtain the list of peer nodes from the directory server in a conventional manner. In this embodiment, a specific implementation manner through which the first sub-module 4011 obtains the list of peer nodes from the directory server and a specific expression form of the content are not limited.

The second sub-module 4012 is configured to determine, according to the list of peer nodes obtained by the first sub-module 4011, the source node which provides the content. That is, after the first sub-module 4011 obtains the list of peer nodes, the second sub-module 4012 selects a peer node from the list of peer nodes. The information about the peer node selected by the second sub-module 4012 is the information about the source node.

If the second sub-module 4012 is the entity for determining the source node which provides the content, the third sub-module 4013 is configured to obtain the information about the storage and the resource control information from the source node determined by the second sub-module 4012. Optionally, the third sub-module 4013 may also obtain the access right control information set by the source node from the source node. The third sub-module 4013 may obtain the resource control information and the access right control information at the same time from one message sent by the source node. The third sub-module 4013 may also obtain the resource control information from one message sent by the source node, and obtain the access right control information from another message sent by the source node.

The routing computation sub-module 4014 is configured to determine the source node which provides the content through routing computation. That is, when a peer node needs a content, the routing computation sub-module 4014 performs routing computation, and the routing computation sub-module 4014 can get the information about the source node of the content according to a result of the routing computation. The routing computation sub-module 4014 may perform the routing computation in a conventional routing computation manner. In this embodiment, a specific implementation manner in which the routing computation sub-module 4014 performs the routing computation is not limited.

If the routing computation sub-module 4014 is the entity for determining the source node which provides the content, the third sub-module 4013 is configured to obtain the information about the storage and the resource control information from the source node determined by the routing computation sub-module 4014. Optionally, the third sub-module 4013 may also obtain the access right control information set by the source node from the source node. The third sub-module 4013 may obtain the resource control information and the access right control information at the same time from one message sent by the source node. The third sub-module 4013 may also obtain the resource control information from one message sent by the source node, and obtain the access right control information from another message sent by the source node.

The sending module 410 is configured to send the resource control information obtained by the obtaining module 400 to the storage. The sending module 410 may send the resource control information obtained by the obtaining module 400 to the storage according to the information about the storage obtained by the obtaining module 400. The resource control information is used to control resources used for performing content operations between the storage and the content request node.

The sending module 410 may send the obtained resource control information to the storage in multiple manners. For example, the sending module 410 encapsulates the obtained resource control information into a message (the message does not carry the access right control information), and sends the message to the storage. For another example, the sending module 410 encapsulates the resource control information and the access right control information obtained by the obtaining module 400 together into a message, and sends the message to the storage. In this embodiment, a specific name of the message sent by the sending module 410, a specific protocol used by the message, and a specific implementation manner in which the sending module 410 sends the resource control information to the storage are not limited.

The sending module including 410 may include an encapsulation sub-module 411 and a sending sub-module 412.

The encapsulation sub-module 411 is configured to encapsulate the resource control information and the access right control information obtained by the obtaining module 400 together into a message.

The sending sub-module 412 is configured to send the message encapsulated with the resource control information and the access right control information to the storage according to the information about the storage obtained by the obtaining module 400.

In the prior art, the source node sends the resource control information to the storage. However, if there are many content request nodes which request downloading of the content, or the content has many fragments, the content request node has to request the fragments multiple times, and the information interaction between the source node and the storage is very frequent, which raises very high requirements on the processing capability of the storage. In addition, when the resource control information is received, the storage creates a table for the resource control information, which occupies the space of the storage. Sometimes, the content request node obtains the resource control information, but does not necessarily download the content. For example, in cases of an attack, resources are wasted for the interaction between the source node and the storage and the maintenance of the space and table on the storage. In the third embodiment, the obtaining module 400 in the content request node obtains the resource control information set, by the source node of the content, for accessing content, and the sending module 410 in the content request node sends the resource control information to the storage, so as to avoid the information interaction process between the storage and the source node of the content, thereby lowering the number of the terminal nodes interacting with the storage and reducing performance requirements on the storage.

### Embodiment 4

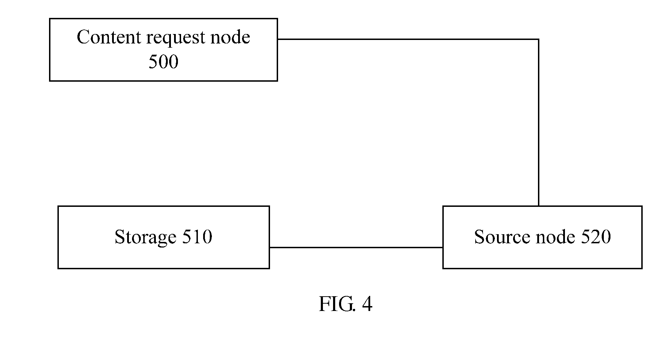

A resource control system in a peer-to-peer network. The system is as shown in FIG. 4.

The system in FIG. 4 includes a content request node 500 and a storage 510. Optionally, the system may also include a source node 520. FIG. 5 only schematically shows one content request node 500, one storage 510, and one source node 520. In practical applications, the system may include multiple content request nodes 500, or include multiple storages 510, or include multiple source nodes 520.

The content request node 500 is configured to obtain resource control information set by the source node 520 of a content, and send the resource control information to the storage 510. The content request node 500 may also obtain information about the storage 510 which provides the content, so that the content request node 500 can send the resource control information to the storage 510 according to the obtained information about the storage 510.

The resource control information obtained by the content request node 500 may be resource control information which is not signed digitally and encrypted, or resource control information which is signed digitally or encrypted. In addition, the access right control information obtained by the content request node 500 may be access right control information which is not signed digitally and encrypted, or resource control information which is signed digitally or encrypted.

If the resource control information or the access right control information obtained by the content request node 500 is signed digitally or encrypted, a key (for example, a public key or a private key) involved in the digital signature or encryption may be determined in advance through negotiation by the source node 520 and the storage 510. A specific negotiation process is as described in the first embodiment and will not be repeatedly described herein.

The content request node 500 may determine the storage 510 which provides the content and obtain the resource control information in multiple modes. For example, the content request node 500 obtains the information about the storage 510 which provides the content and the resource control information from the source node 520 of the content. For another example, the content request node obtains the information about the storage 510 which provides the content and the resource control information from a directory server in the peer-to-peer network. In addition, the content request node 500 may obtain one of the information about the storage 510 and the resource control information from the source node 520 of the content and obtain the other one of the information about the storage 510 and the resource control information from the directory server. In this embodiment, a specific implementation process in which the content request node 500 obtains the information about the storage 510 and the resource control information is not limited.

The content request node 500 sends the obtained resource control information to the storage 510 in multiple manners. For example, the content request node 500 encapsulates the obtained resource control information into a message (the message does not carry the access right control information), and sends the message to the storage 510. For another example, the content request node 500 encapsulates the obtained resource control information and the obtained access right control information together into a message, and sends the message to the storage 510. In this embodiment, a specific name of the message, a specific protocol used by the message, and a specific implementation manner in which the content request node 500 sends the resource control information to the storage 510 are not limited.

The storage 510 is configured to receive the resource control information sent by the content request node 500, and perform content operations between the storage 510 and the content request node 500 according to resources corresponding to the resource control information.

If the message received by the storage 510 carries the access right control information, the storage 510 verifies the access right control information. After the verification is passed, the storage 510 decrypts the resource control information carried in the message, the storage 510 allocates resources to the content request node 500 according to the resource control information obtained after decryption, and the storage 510 performs content operations between the storage 510 and the content request node 500 according to the assigned resources. For example, the storage 510 sends the content requested by the content request node 500 to the content request node 500. For another example, the storage 510 receives the content uploaded by the content request node 500.

The specific operations performed by the content request node 500 and the storage 500, and the structure of the content request node 500 are as described in the above embodiments and will not be repeatedly described herein.

In the prior art, the source node 520 sends the resource control information to the storage 510. However, if there are many content request nodes which request downloading of the content, or the content has many fragments, the content request node has to request the fragments multiple times, and the information interaction between the source node 520 and the storage 510 is very frequent, which raises very high requirements on the processing capability of the storage 510. In addition, when the resource control information is received, the storage 510 creates a table for the resource control information, which occupies the space of the storage. Sometimes, the content request node 500 obtains the resource control information but does not necessarily download the content. For example, in cases of an attack, resources are wasted for the interaction between the source node 520 and the storage 510 and the maintenance of the space and table on the storage 510. In the fourth embodiment, the content request node 500 obtains the resource control information set, by the source node 520 of the content, for accessing content, and the content request node 500 sends the resource control information to a storage 510, so as to avoid the information interaction process between the storage 510 and the source node 520 which provides the content, thereby lowering the number of terminal nodes interacting with the storage 510 and reducing the performance requirements on the storage 510.

According to the description of the embodiments above, a person skilled in the art may clearly understand that the present invention may be implemented by software plus a necessary hardware platform. Certainly, the present invention may also be implemented by only hardware. However, the former is preferred in most circumstances. Based on this, all or part of the technical solutions of the present invention that make contribution to the prior art may be implemented in the form of a software product, where the software product can be used to execute the above method steps. The computer software product may be stored in a storage medium such as a ROM/RAM, a magnetic disk, or an optical disk, and includes multiple instructions to enable a computer device (which may be a personal computer, a server, or a network device) to execute all or part of the steps of the method described in embodiments of the present invention.

The above are only exemplary embodiments of the present invention. The protection scope of the present invention, however, is not limited thereto. Any modification or replacement readily apparent to the skilled person without departing from the technical scope disclosed by the present invention should be covered in the protection scope of the present invention. Hence the protection scope of the present invention should be defined by the claims.

## Claims

1. A resource control method in a peer-to-peer network, comprising:
obtaining, by a content request node, resource control information set by a source node of a content, wherein the content is stored in a storage which provides the content, and the storage is a network node which provides content storage services for the source node of the content; and
sending, by the content request node, the resource control information to the storage, wherein the resource control information is used to control resources used for performing content operations between the storage and the content request node.

2. The method according to claim 1, wherein the obtaining, by the content request node, the resource control information set by the source node of the content comprises:
obtaining, by the content request node, the resource control information set by the source node of the content from the source node.

3. The method according to claim 2, wherein the obtaining, by the content request node, the resource control information set by the source node of the content from the source node comprises:
obtaining, by the content request node, a list of peer nodes which provide the content from a directory server;
determining, by the content request node, the source node of the content according to the list of the peer nodes; and
obtaining, by the content request node, the resource control information from the source node;
or the obtaining, by the content request node, the resource control information set by the source node of the content from the source node comprises:
determining, by the content request node, the source node of the content through routing computation, and obtaining the resource control information from the source node of the content.

4. The method according to any one of claims 1 to 3, wherein the sending, by the content request node, the resource control information to the storage comprises:
encapsulating the resource control information and access right control information which is set by the source node together into a message, and sending the message to the storage.

5. A terminal device being a peer node in a peer-to-peer network, comprising:
an obtaining module, configured to obtain resource control information set by a source node of a content, wherein the content is stored in a storage which provides the content, and the storage is a network node which provides content storage services for the source node of the content; and
a sending module, configured to send the resource control information to the storage, wherein the resource control information is used to control resources used for performing content operations between the storage and the content request node.

6. The device according to claim 5, wherein the obtaining module comprises:
a first obtaining unit, configured to obtain the resource control information from the source node.

7. The device according to claim 6, wherein the first obtaining unit comprises:
a first sub-module, configured to obtain a list of peer nodes which provide the content from a directory server;
a second sub-module, configured to determine the source node of the content according to the list of the peer nodes; and
a third sub-module, configured to obtain the resource control information from the source node;
or the first obtaining unit comprises:
a routing computation sub-module, configured to determine the source node of the content through routing computation; and
a third sub-module, configured to obtain the resource control information from the source node.

8. The device according to any one of claims 5 to 7, wherein the sending module comprises:
an encapsulation sub-module, configured to encapsulate the resource control information and access right control information set by the source node together into a message; and
a sending sub-module, configured to send the message to the storage.

9. A resource control system in a peer-to-peer network, wherein the system comprises:
a content request node, configured to obtain resource control information set by a source node of a content, wherein the content is stored in a storage which provides the content, and send the resource control information to the storage; and
the storage, which is a network node that provides content storage services for the source node of the content, and configured to receive the resource control information, and perform content operations between the storage and the content request node according to resources corresponding to the resource control information.

10. The system according to claim 9, further comprising:
the source node, configured to provide the resource control information to the content request node.
